# EUROPÄISCHE PATENTANMELDUNG

(11) **EP 3 142 186 A1**
(43) Veröffentlichungstag der Anmeldung: **15.03.2017**
(21) Anmeldenummer: 16173738.2
(22) Anmeldetag: 09.06.2016
(51) Int. Cl.: H01Q 1/22, H01Q 19/06, H01Q 15/02, G01S 13/88, G01F 23/284, G01S 7/02, G02B 27/00, H01Q 17/00

(54) **ANTENNE MIT EINER LINSE**

(30) Priorität: 11.09.2015 DE 102015115395
(71) Anmelder: Krohne Messtechnik GmbH, 47058 Duisburg (DE)
(72) Erfinder: Linkies, Mathias, 45478 Mülheim Mülheim (DE); Adrovic, Almir, 47249 Duisburg (DE)
(74) Vertreter: Gesthuysen Patent- und Rechtsanwälte

(57) **Zusammenfassung**

Beschrieben und dargestellt ist eine Antenne (1), mit einem Antennengehäuse (2), mit mindestens einem Speiseelement (3) und mit mindestens einer Linse (5), wobei die Linse (5) wenigstens eine erste Linsenoberfläche (6) und eine zweite Linsenoberfläche (7) aufweist, wobei das Speiseelement (3) der Führung eingekoppelter elektromagnetischer Strahlung und der Abstrahlung elektromagnetischer Strahlung in Richtung auf die erste Linsenoberfläche (6) dient, wobei mit der Linse (5) die über die erste Linsenoberfläche (6) empfangene elektromagnetische Strahlung weitergeführt und über die zweite Linsenoberfläche (7) prozessseitig abgestrahlt werden kann.

Die Aufgabe, die aus dem Stand der Technik bekannten Nachteile - zumindest weitestgehend zu beheben, wird dadurch gelöst, dass die Linse (5) zumindest teilweise aus einem porösen Material (8) besteht, wobei das poröse Material (8) die erste Linsenoberfläche (6) und die zweite Linsenoberfläche (7) miteinander verbindet, und dass eine Spülvorrichtung umfasst ist, über die die Linse (5) derart mit einem Medium beaufschlagt werden kann, dass das Medium über die erste Linsenoberfläche (6) durch das poröse Material (8) und durch die zweite Linsenoberfläche (7) tritt.

Die Erfindung betrifft ebenfalls ein Verfahren zum Betreiben einer solchen Antenne (1).

## Beschreibung

Die Erfindung betrifft eine Antenne für ein Füllstandmessgerät, mit einem Antennengehäuse, mit mindestens einem Speiseelement und mit mindestens einer Linse, wobei die Linse wenigstens eine erste Linsenoberfläche und eine zweite Linsenoberfläche aufweist, wobei das Speiseelement der Führung eingekoppelter elektromagnetischer Strahlung und der Abstrahlung elektromagnetischer Strahlung in Richtung auf die erste Linsenoberfläche dient, wobei mit der Linse die über die erste Linsenoberfläche empfangene elektromagnetische Strahlung weitergeführt und über die zweite Linsenoberfläche prozessseitig abgestrahlt werden kann.

Die in Rede stehenden Antennen werden beispielsweise in nach dem Radarprinzip arbeitenden Füllstandmessgeräten verwendet, wobei die Füllstandmessgeräte neben der Antenne eine elektronische Sende- und Auswerteeinheit umfassen. Von der elektronischen Sende- und Auswerteeinheit werden elektromagnetische Wellen erzeugt und über eine geeignete Übertragungsstrecke zur Antenne geleitet. Die Antenne selbst kann auf unterschiedliche Weise realisiert sein. Beispielsweise kann es sich um eine dielektrische Antenne oder einen Hornstrahler handeln; die Antenne kann ebenfalls als eine Kombination verschiedener Antennentechnologien realisiert sein. Auf den konkreten Antennentyp kommt es vorliegend nicht an. Relevant ist jedoch, dass die Antenne eine Linse umfasst.

Oftmals finden solche Antennen Einsatz in problematischen Messumgebungen, beispielsweise in Silos oder sonstigen Behältern, die beispielsweise mit einem staubigen Medium gefüllt sein können. Auch in der Lebensmittelindustrie und der Pharmaindustrie kommen in Rede stehende Antennen zum Einsatz. Gegebenenfalls kommen die Antennen mit ihrer Linse in Berührung mit dem Medium. Eine Verwendung in problematischen Messumgebungen führt dazu, dass Staub oder ein Kondensat an der Antennenlinse anhaftet und sich ablagert und die Antenne so verschmutzt wird. Dadurch wird das Messsignal gestört bis hin zur Unmöglichkeit der Verwendung der Antenne für weitere Messungen. Eine Säuberung der Antenne bzw. der Antennenlinse ist dann erforderlich, um eine einwandfreie Funktion der Antenne, zum Beispiel die notwendige Genauigkeit einer Füllstandmessung, zu gewährleisten.

Aus dem Stand der Technik ist bekannt, Antennen so zu spülen, zu kühlen oder zu beheizen, dass eine Spülleitung für ein Spülmedium durch den Prozessflansch oder Prozesstank durchgeführt und zum Teil sehr aufwändig zu der Antenne geleitet wird. Eine derartige Spülvorrichtung kommt beispielsweise bei den Radar-Füllstandmessern "BM 70 A" und "BM 70 P" der Anmelderin zum Einsatz.

In der Regel sind die Antennenlinsen aus einem Kunststoff, beispielsweise PEEK, gefertigt. Problematisch bei den aus dem Stand der Technik bekannten Linsen ist, dass ein Einsatz unter extremen Bedingungen, wie einer sehr hohen oder sehr niedrigen Temperatur oder bei hohen Drücken, mit Nachteilen behaftet ist. Ein Arbeiten unter hohen Drücken sorgt für Verspannungen in der Linse, die zu einer veränderten Abstrahlcharakteristik der Linse führen oder die Zerstörung der Linse zur Folge haben können.

Kunststofflinsen haben materialbedingt eine geringe Streckfestigkeit, die bei einer Erhöhung der Temperatur weiter sinkt. Dadurch bedingt sind sie nicht mit hohem Druck belastbar, eignen sich demnach nicht für Einsatzzwecke unter Extrembedingungen.

Der Erfindung liegt die Aufgabe zugrunde, eine Antenne der in Rede stehenden Art anzugeben, bei der die aus dem Stand der Technik bekannten Nachteile - zumindest weitestgehend - behoben werden.

Die Aufgabe ist zunächst und im Wesentlichen dadurch gelöst, dass die Linse zumindest teilweise aus einem porösen Material besteht, wobei das poröse Material die erste Linsenoberfläche und die zweite Linsenoberfläche miteinander verbindet, und dass eine Spülvorrichtung umfasst ist, über die die Linse derart mit einem Medium beaufschlagt werden kann, dass das Medium über die erste Linsenoberfläche durch das poröse Material und durch die zweite Linsenoberfläche tritt.

Wenn die Rede von einem porösen Material ist, dann ist damit gemeint, dass das Material zumindest teilweise, bevorzugt vollständig eine offene Porosität aufweist, das Material also Hohlräume aufweist, die untereinander und mit der Umgebung, also mit den an die erste Linsenoberfläche und an die zweite Linsenoberfläche angrenzenden Bereichen, in Verbindung stehen. Dadurch wird erreicht, dass die Linse für bestimmte Medien durchlässig ist. Die limitierende Größe für die Durchlässigkeit ist hier die Größe der Hohlräume in dem porösen Material, bzw. die Größe von gegebenenfalls in dem Medium enthaltenen Partikeln.

Gegenüber dem Stand der Technik weist die erfindungsgemäße Antenne insbesondere den Vorteil auf, dass eine Spülung der Linse mit dem Medium nicht durch ein Spülen der zweiten Linsenoberfläche von außen - also durch ein prozessraumseitiges Abspülen - realisiert wird, sondern dadurch, dass eine Spülvorrichtung umfasst ist, über die die Linse so mit dem Medium beaufschlagt werden kann, dass das Medium über die dem Inneren des Antennengehäuses zugewandte erste Linsenoberfläche durch die porösen Bereiche der Linse durch die zweite, prozessseitige Linsenoberfläche tritt, eine Spülung der Linse dadurch erfolgt, dass das Medium - Spülmedium - durch die Linse tritt. Mit anderen Worten, es erfolgt ein - zumindest bereichsweises - Durchspülen der Linse in Abstrahlrichtung.

Des Weiteren hat sich gezeigt, dass die erfindungsgemäße Antenne besonders zum Einsatz in Bereichen mit hohen Drücken geeignet ist. Die Linse schließt mit ihrer zweiten Linsenoberfläche in der Regel den Prozessraum ab - wobei als Prozessraum ganz allgemein der Raum zu verstehen ist, in den die elektromagnetische Strahlung über die zweite Linsenoberfläche abgestrahlt werden kann -, ist also stets dem in dem Prozessraum herrschenden Druck ausgesetzt. Dadurch, dass die Linse zumindest teilweise aus porösem Material besteht, kann es zu einem Druckausgleich zwischen einem an die erste Linsenoberfläche angrenzenden Bereich und dem an die zweite Linsenoberfläche angrenzenden Prozessraum kommen. Dadurch wird erreicht, dass die Linse selbst druckentlastet wird.

Da die Linse der erfindungsgemäßen Antenne nicht mehr den Druckabschluss zum Prozessraum realisieren kann, muss dafür gesorgt werden, dass die Antenne bzw. das Antennengehäuse an einer anderen Stelle einen Druckabschluss gegenüber dem Prozessraum aufweist, so dass ein an die Antenne bzw. an das Antennengehäuse angrenzender Funktionsraum druckdicht gegenüber dem Prozessraum abgeschlossen ist. Unter dem Funktionsraum ist ganz allgemein der Raum zu verstehen, in dem sich die Elektronikkomponenten und gegebenenfalls der Transmitter des Messgeräts, in oder mit dem die Antenne verbaut ist, befinden. Der Druckabschluss kann beispielsweise durch ein Verschweißen oder mit einer geeigneten Dichtung realisiert sein.

Für die porösen Bereiche der Linse können verschiedene Materialien Verwendung finden. Eine bevorzugte Ausführungsform ist dadurch gekennzeichnet, dass das poröse Material Polypropylen (PP), Ultra-High-Molecular-Weight-Polyethylen (UHMW-PE) oder Polytetrafluorethylen (PTFE) ist. Die erfindungsgemäße Antenne ist jedoch ausdrücklich nicht auf die Verwendung eines der drei genannten Materialien beschränkt.

Das Kriterium für ein geeignetes Material ist, dass das Material zumindest teilweise eine offene Porosität aufweist. Materialien, die nur eine geschlossene Porosität aufweisen, nämlich eine solche Porosität, bei der die Hohlräume nicht miteinander in Verbindung stehen, sind demnach nicht geeignet. Eine offene Porosität wird beispielsweise durch geeignetes Sintern erzielt, also das "Zusammenbacken" eines körnigen oder pulverigen Ausgangsguts, wobei der Sintervorgang rechtzeitig beendet werden muss, um im hinreichenden Maße die geforderte Offenporigkeit zu erhalten. Hieraus ist ersichtlich, dass auch keramische oder metallische Ausführungen des porösen Materials realisierbar sind.

Die Geometrie der Linse als solche ist für die vorliegende Erfindung nicht von Bedeutung. Die Erfindung kann beispielsweise mit einer "üblich geformten" Linse, aber auch mit einer Ellipsoid-Linse, wie sie aus der DE 10 2008 008 715 A1 bekannt ist, realisiert sein.

Die Spülvorrichtung kann auf verschiedene Arten realisiert sein. Die Spülvorrichtung kann durch eine an die Linse grenzende Zuleitung - beispielsweise in Form eines Silikonschlauches - realisiert sein. Die Spülvorrichtung muss dann mit einer "Spülmediumquelle" verbunden sein, damit eine Spülung erfolgen kann. Erfindungswesentlich ist jedoch zunächst nur das Vorhandensein der Spülvorrichtung, die grundsätzlich das gewünschte Durchspülen ermöglicht.

Eine besonders bevorzugte Ausgestaltung der erfindungsgemäßen Antenne ist dadurch gekennzeichnet, dass die Spülvorrichtung eine in dem Antennengehäuse ausgebildete Kammer umfasst, wobei die Kammer zumindest teilweise von der Linse begrenzt ist, die Kammer an das Speiseelement angrenzt und wobei die Kammer mit dem Medium beaufschlagbar ist, insbesondere durch eine durch eine Kammerwand der Kammer und/oder das Antennengehäuse führende Zuleitung mit einem Medium beaufschlagbar ist.

Wenn davon die Rede ist, dass die Kammer an das Speiseelement angrenzt, dann kann dies beispielsweise dadurch realisiert sein, dass die Kammer zwischen dem Speiseelement und der Linse angeordnet ist, wobei die Kammer zur Linse hin - bzw. im Bereich der Linse - offen ist, die Linse also die Kammer begrenzt. Unter "angrenzen" wird auch verstanden, dass das Speiseelement zumindest teilweise in die Kammer hineinragen kann. Ist die Linse als Ellipsoid-Linse ausgestaltet, dann kann das Speiseelement auch durch die gesamte Kammer dringen oder die Kammer kann als "Ringkammer" um das Speiseelement realisiert sein.

Die Kammer kann auf verschiedene Weisen ausgebildet sein. In einer Ausbildungsform der Kammer ist vorgesehen, dass die Kammer separate Kammerwände aufweist, die Kammer demnach unabhängig vom Antennengehäuse einen eigenständigen, abgeschlossenen Raum bildet.

Eine andere Ausbildungsform der Kammer ist dadurch gekennzeichnet, dass die Kammer teilweise durch das Antennengehäuse gebildet wird, das Antennengehäuse also teilweise auch die Kammerwände realisiert.

Im Betriebszustand der Antenne wird die in das Speiseelement eingekoppelte und von dem Speiseelement geführte Strahlung von dem Speiseelement in Richtung auf die erste Linsenoberfläche abgestrahlt. Weist die Antenne eine Kammer auf, wird die elektromagnetische Strahlung zunächst in die Kammer abgestrahlt. Die elektromagnetische Strahlung passiert die Kammer, die Linse empfängt die Strahlung über ihre erste Linsenoberfläche, führt sie weiter und strahlt sie über die zweite Linsenoberfläche in den Prozessraum ab. Um Reflexionen der elektromagnetischen Strahlung an den Kammerwänden zu vermeiden, die zu einer Störung des für die Messung eigentlich interessierenden und ohne Reflexion durchlaufenden Messsignals führen, ist eine besondere Ausführungsform der erfindungsgemäßen Antenne dadurch gekennzeichnet, dass die Kammer mit einem elektromagnetische Strahlung absorbierenden Material ausgekleidet ist oder aus einem elektromagnetische Strahlung absorbierenden Material besteht. Ein die elektromagnetische Strahlung absorbierendes Material ist beispielsweise ein Kunststoff mit Kohlenstoff oder ein Kunststoff mit Metallpartikeln. Eine Auskleidung kann zum Beispiel dadurch realisiert werden, dass die Kammer mit einem geeigneten Material beschichtet oder bedampft wird.

Die Kammer ist mit einem Medium beaufschlagbar ist, insbesondere ist die Kammer durch eine durch eine Kammerwand und/oder das Antennengehäuse führende Zuleitung mit dem Medium beaufschlagbar. Aufgrund der zumindest teilweisen Porosität der Linse entweicht das Medium durch die porösen Bereiche der Linse aus der Kammer. Hierdurch wird ein Spüleffekt der Linse erzielt.

Durch einen Temperaturausgleich zwischen der Linse und dem durch die porösen Bereiche der Linse strömendem Medium wird die Linse der erfindungsgemäßen Antenne auf sehr einfache Weise - abhängig von der Temperatur des Mediums - erwärmt oder gekühlt. Durch geeignete Wahl des temperierten Mediums ist ein Einsatz der erfindungsgemäßen Antenne auch unter sehr heißen oder sehr kalten Messbedingungen möglich, da die Temperatur der Linse unabhängig von der Temperatur der Messumgebung eingestellt werden kann. Durch eine gleichmäßige Temperierung der Linse lassen sich auch durch Temperaturdifferenzen verursachte Materialspannungen verhindern.

Durch den Spüleffekt wird die Linse von sich ansammelnden Ablagerungen auf der zweiten Linsenoberfläche gereinigt, die von dem Medium weggespült werden.

In einer besonderen Ausgestaltung der erfindungsgemäßen Antenne ist die Kammer derart ausgelegt, dass sie so mit dem Medium beaufschlagbar ist, dass ein Überdrück in der Kammer entsteht. Das Medium entweicht unter einem höheren Druck aus der Kammer. Hierdurch können auch stark anhaftende Ablagerungen abgetragen werden.

Das Medium muss derart gewählt sein, dass es sich nicht selbst in dem porösen Material ablagert, um ein Verstopfen der Hohlräume zu vermeiden. Insbesondere geeignet ist ein gasförmiges Medium oder ein flüssiges Medium, insbesondere ein flüssiges Medium mit einer hohen Fluidität.

In einer bevorzugten Ausführungsform der erfindungsgemäßen Antenne wird das Medium von außerhalb des Antennengehäuses zugeführt. Bei einer weiteren Ausführungsform ist eine Mediumkammer innerhalb des Antennengehäuses vorgesehen, von der aus das Medium in die Kammer geführt wird.

Ist die Kammer als separate Kammer, also unabhängig von dem Antennengehäuse realisiert, kann in einer Ausgestaltung der Antenne das Medium von außerhalb des Antennengehäuses über die Zuleitung zugeführt werden. Dann führt die Zuleitung sowohl durch eine Kammerwand als auch durch das Antennengehäuse. Die Zuleitung kann als separates Bauteil realisiert sein, wie beispielsweise als Schlauch oder Rohr. Dann ist darauf zu achten, dass eine funktionsfähige Abdichtung realisiert wird, damit das Medium nicht in unerwünschter Weise aus der Zuleitung tritt. In einer weiteren Ausführungsform ist die Zuleitung als Ausnehmung in der Kammerwand und der Außenwand realisiert, beispielsweise durch eine Bohrung. Es ist auch eine Ausführungsform denkbar, bei der der durch die Kammerwand führende Teil der Zuleitung als separates Bauteil und der durch das Antennengehäuse führende Teil der Zuleitung als Ausnehmung realisiert ist, oder umgekehrt.

In einer weiteren Ausgestaltung, bei der die Kammer als separate Kammer realisiert ist, ist vorgesehen, dass das Medium aus einem ebenfalls in dem Antennengehäuse angeordneten Mediumtank der Kammer zugeführt wird. Die Zuleitung führt dann nur durch die Kammerwand, nicht jedoch durch das Antennengehäuse. Grenzt der Mediumtank direkt an die Kammer an, ist eine Realisierung der Zuleitung durch Ausnehmungen in der Kammerwand und der Mediumtankwand möglich.

Ist der Mediumtank nicht unmittelbar benachbart zu der Kammer angeordnet, dann empfiehlt sich eine Zuleitung, die als separates Bauteil realisiert ist. Die Wahl des Bauteils - beispielsweise Rohr oder Schlauch - und insbesondere die Wahl des Materials des Bauteils - beispielsweise Silikon, Kunststoff oder Edelstahl - ist stets auch mediumabhängig und muss den Anforderungen des einzuspeisenden Mediums genügen. Ein Medium mit hoher Temperatur benötigt eine hochtemperaturbeständige Zuleitung. Ein Medium mit tiefer Temperatur braucht eine tieftemperaturbeständige Zuleitung. Bei einer Einspeisung von Druckluft muss die Zuleitung druckbeständig sein. Im Idealfall wird ein derartiges Material verwendet, das jeglichen Anforderungen genügt, so dass die Auswahl an zuführbaren Medien nicht aufgrund der Zuleitung eingeschränkt ist.

Es muss eine Möglichkeit geschaffen werden, den Mediumtank selbst stets mit Medium zu füllen. Zum einen kann es sein, dass der Mediumtank selbst ausgetauscht werden kann, dann muss das Antennengehäuse entsprechend geöffnet werden können. Ebenfalls kann es auch eine Ausführungsform geben, bei der der Mediumtank selbst aufgefüllt wird. Das kann zum Beispiel durch eine Zuleitung zu dem Mediumtank erfolgen, wobei die Zuleitung dann aus dem Antennengehäuse hinausführen muss.

Ist die Kammer als Teil des Antennengehäuses realisiert, sind also die Kammerwände zumindest teilweise durch das Antennengehäuse realisiert, dann führt die Zuleitung nur durch das Antennengehäuse. Auch in der Ausführungsform ist eine Realisierung der Zuleitung als separates Bauteil oder aber als Ausnehmung in dem Antennengehäuse möglich.

Wenn die erfindungsgemäße Antenne dadurch gekennzeichnet ist, dass die Linse zumindest teilweise aus einem porösen Material besteht, wobei das poröse Material die erste Linsenoberfläche und die zweite Linsenoberfläche miteinander verbindet, dann kann dies auf verschiedene Art und Weise realisiert sein.

Eine besonders bevorzugte Ausführungsform der erfindungsgemäßen Antenne ist dadurch gekennzeichnet, dass die Linse im Bereich zwischen der ersten Linsenoberfläche und der zweiten Linsenoberfläche vollständig aus porösem Material besteht. Die Linse ist also dadurch ausgezeichnet, dass die gesamte effektive Nutzfläche der Linse, also die Fläche, durch die die elektromagnetische Strahlung im Betriebszustand der Antenne weitergeführt und über die zweite Linsenoberfläche abgestrahlt wird, aus porösem Material besteht. Diese bevorzugte Ausführungsform hat den Vorteil, dass die gesamte effektiv genutzte Linsenfläche für ein Medium durchlässig ist. Damit gehen weitere Vorteile einher: eine vollständige und gleichmäßige Erwärmung oder Kühlung der Linse, ein Spülen über die gesamte effektive Nutzfläche, dadurch ein Abtragen von sich ansammelnden Anlagerungen von der gesamten zweiten Linsenoberfläche.

Es kann auch die gesamte Linse aus porösem Material gefertigt sein, also auch diejenigen Bereiche, die nicht im Strahlengang der elektromagnetischen Strahlung liegen, beispielsweise die Bereiche, in denen die Linse mit dem Gehäuse in Kontakt ist.

Eine weitere, besonders bevorzugte Ausführungsform der erfindungsgemäßen Antenne ist dadurch gekennzeichnet, dass die Linse Kanäle aus porösem Material aufweist. Der restliche Teil der Linse ist aus einem nicht porösen Material gefertigt und nicht durchlässig für ein Medium. Eine Kühlung oder Erwärmung der Linse durch ein warmes oder kaltes Medium erfolgt also zunächst lokal im Bereich der porösen Kanäle.

Die Anordnung der Kanäle über den Querschnitt der Linse ist beliebig. Besonders bevorzugt ist eine Anordnung derart, dass die Kanäle gleichmäßig über die Linsenfläche verteilt angeordnet sind.

Der Querschnitt und der Durchmesser der Kanäle sind beliebig wählbar.

In einer bevorzugten Ausgestaltung sind die Kanäle senkrecht zu den Linsenoberflächen angeordnet. Eine weitere bevorzugte Ausgestaltung ist dadurch gekennzeichnet, dass die Kanäle unter einem von der Flächennormalen abweichenden Winkel zu den Linsenoberflächen angeordnet sind. Eine weitere Ausgestaltung ist dadurch gekennzeichnet, dass sowohl senkrecht zu den Linsensoberflächen angeordnete Kanäle als auch unter einem von dem Winkel der Flächennormalen abweichenden Winkel zu den Linsenoberflächen angeordnete Kanäle vorgesehen sind.

Es gibt verschiedene Möglichkeiten, die Kanäle aus porösem Material in der Linse zu realisieren. Eine Ausführungsform sieht vor, dass das poröse Material in die Linse eingesintert ist. Vorzugsweise weist die Linse dann Kanäle in Form von Bohrungen auf, in die das Material eingesintert wird.

Eine weitere Ausführungsform sieht vor, in in der Linse bestehende Ausnehmungen Stopfen aus porösem Material einzuführen. Ein Vorteil dieser Ausführungsform liegt darin, dass die Stopfen austauschbar sind. So ist beispielsweise bei einer Verstopfung des porösen Materials ein einfacher Austausch möglich und nicht die gesamte Linse muss ersetzt werden. Die Stopfen müssen derart mit der Linse verbunden sein, dass sie sich nicht während des Betriebs der Antenne lockern oder sogar lösen. Eine Verbindung muss so realisiert sein, dass keine Beeinträchtigung der Ausbreitung der elektromagnetischen Strahlung zu verzeichnen ist. Entsprechend empfiehlt sich eine Anpassung des Stopfenmaterials an das Linsenmaterial, idealerweise weisen beide Materialien einen möglichst übereinstimmenden Brechungsindex auf.

Weist die Linse Kanäle aus porösem Material auf und sind die Kanäle beispielsweise ringförmig um einen Linsenmittelpunkt angeordnet, dann kann bevorzugt die Spülvorrichtung in Form einer Ringkammer realisiert sein. Die Kammer grenzt dann nur an den Teil der Linse an, in dem sich die porösen Kanäle befinden. Die Kammer selbst kann durch eine Zuleitung mit dem Medium beaufschlagt werden. Des Weiteren kann die Spülvorrichtung durch mit den porösen Kanälen verbundene Leitungen realisiert sein.

Eine weitere bevorzugte Ausführungsform einer erfindungsgemäßen Antenne, ist dadurch gekennzeichnet, dass die Linse eine poröse Deckschicht aufweist, wobei die Deckschicht an der dem Speiseelement abgewandten Seite der Linse vorgesehen ist.

Die Erfindung betrifft ferner ein Verfahren zum Betreiben der zuvor beschriebenen erfindungsgemäßen Antenne. Bei dem Verfahren wird also ausgegangen von einer Antenne mit einem Antennengehäuse, mit mindestens einem Speiseelement und mit mindestens einer Linse, wobei die Linse wenigstens eine erste Linsenoberfläche und eine zweite Linsenoberfläche aufweist, wobei das Speiseelement der Führung eingekoppelter elektromagnetischer Strahlung und der Abstrahlung elektromagnetischer Strahlung in Richtung auf die erste Linsenoberfläche dient, wobei mit der Linse die über die erste Linsenoberfläche empfangene elektromagnetische Strahlung weitergeführt und über die zweite Linsenoberfläche abgestrahlt werden kann, wobei die Linse zumindest teilweise aus einem porösen Material besteht, wobei das poröse Material die erste Linsenoberfläche und die zweite Linsenoberfläche miteinander verbindet und wobei eine Spülvorrichtung umfasst ist. Hier ist nun erfindungsgemäß vorgesehen, dass die die Linse über die Spülvorrichtung derart mit einem Medium beaufschlagt wird, dass das Medium über die erste Linsenoberfläche durch das poröse Material der Linse und durch die zweite Linsenoberfläche tritt, so dass ein Spüleffekt eintritt.

Eine besondere Ausführungsform des erfindungsgemäßen Verfahrens ist dadurch gekennzeichnet, dass die Beaufschlagung der Kammer mit dem Medium kontinuierlich erfolgt. Der Linse wird also ohne zeitliche Unterbrechung Medium zugeführt, so dass ein Fluss durch das poröse Material der Linse kontinuierlich erfolgt. Durch ein kontinuierliches Beaufschlagen der Linse mit dem Medium geht ein kontinuierlicher Spüleffekt einher. Dadurch bedingt sinkt die Wahrscheinlichkeit, dass sich Ablagerungen auf der Linse ansammeln. Des Weiteren wird durch einen kontinuierlichen Spüleffekt gewährleistet - unter der Annahme, dass sich die Temperatur des Mediums, mit dem gespült wird, nicht ändert - dass die Linse eine stabile Temperatur aufweist.

Eine weitere Ausführungsform des erfindungsgemäßen Verfahrens ist dadurch gekennzeichnet, dass die Beaufschlagung der Linse mit dem Medium in einem vorgegebenen Zeitintervall Δt₁ erfolgt. Diese Ausführungsform hat den Vorteil, dass das Spülmedium sparsam verwendet werden kann und ein Spüleffekt nur dann eintritt, wenn er nötig ist, also wenn die Linse beispielsweise akut mit Ablagerungen verschmutzt ist.

Eine bevorzugte Ausführungsform des erfindungsgemäßen Verfahrens ist dadurch gekennzeichnet, dass die Beaufschlagung der Linse mit dem Medium mit einem Überdruck erfolgt, insbesondere mit einem Überdruck während eines vorgegebenen Zeitintervalls Δt₂. Wird die Linse derart mit Medium unter Überdruck beaufschlagt, durchströmt das Medium mit einem höheren Druck das poröse Material der Linse. Dadurch können auch stark anhaftende Verunreinigungen von der Linse entfernt werden.

Eine weitere Ausführungsform des erfindungsgemäßen Verfahrens ist dadurch gekennzeichnet, dass das Medium auf eine Mediumtemperatur T₁ gebracht wird, bevor die Linse mit dem Medium beaufschlagt wird. Hierdurch kann die Temperatur der Linse beliebig eingestellt werden - selbstverständlich im Rahmen der Möglichkeiten, die die Temperatur des Mediums annehmen kann. Des Weiteren ist durch die Ausführungsform des Verfahrens ermöglicht, die Temperatur der Linse während des Spülens zu ändern, nämlich indem die Temperatur des Mediums geändert wird, bevor es auf die Linse geleitet wird.

Im Einzelnen gibt es nun verschiedene Möglichkeiten, die erfindungsgemäße Antenne und das erfindungsgemäße Verfahren zum Betreiben einer Antenne auszugestalten und weiterzubilden. Dazu wird verwiesen sowohl auf die den Patentansprüchen 1 und 8 nachgeordneten Patentansprüche als auch auf die Beschreibung bevorzugter Ausführungsbeispiele in Verbindung mit der Zeichnung. In der Zeichnung zeigen
- Fig. 1: eine erste Ausgestaltung der erfindungsgemäßen Antenne,
- Fig. 2: eine zweite Ausgestaltung der erfindungsgemäßen Antenne,
- Fig. 3: eine Ausgestaltung einer Linse der erfindungsgemäßen Antenne,
- Fig. 4: Blockschaltbild eines erfindungsgemäßen Verfahrens.

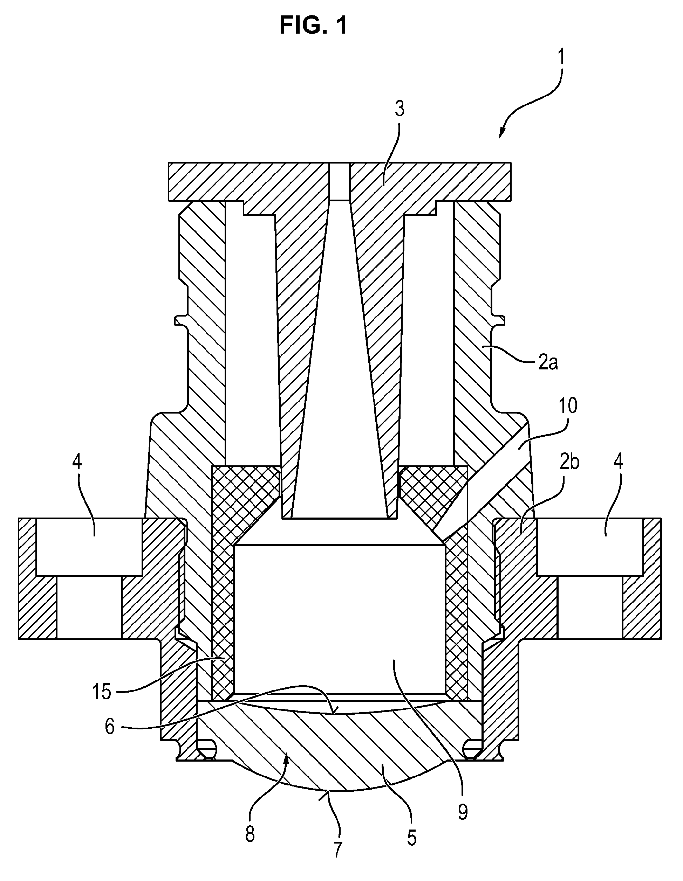

Fig. 1 zeigt eine erfindungsgemäße Antenne 1. Die Antenne 1 umfasst ein Antennengehäuse 2, wobei das Antennengehäuse 2 im dargestellten Ausführungsbeispiel aus zwei Teilen 2a und 2b besteht. Der erste Teil 2a des Gehäuses nimmt ein Speiseelement 3 auf und wird in den zweiten Teil 2b hineingeschraubt. Dafür weist der erste Teil 2a des Gehäuses 2 ein Gewinde und der zweite Teil 2b des Gehäuses 2 ein entsprechendes Gegengewinde auf. Der zweite Teil 2b des Gehäuses 2 weist ferner Bohrungen 4 zur Befestigung der Antenne 1 auf. Die Antenne 1 umfasst ebenfalls eine Linse 5. Bei dem dargestellten Ausführungsbeispiel wird die Linse 5 von dem zweiten Gehäuseteil 2b gehalten und mit dem ersten Gehäuseteil 2a fixiert, indem der erste Gehäuseteil 2a in den zweiten Gehäuseteil 2b eingeschraubt wird.

Die Linse 5 weist eine erste Linsenoberfläche 6 und eine zweite Linsenoberfläche 7 auf. Die in Figur 1 dargestellte Linse 5 besteht vollständig aus einem porösen Material 8, das die erste Linsenoberfläche 6 und die zweite Linsenoberfläche 7 miteinander verbindet. Des Weiteren umfasst das Antennengehäuse 2 eine Spülvorrichtung in Form einer Kammer 9. Die Kammer 9 wird teilweise von der Linse 5 begrenzt und grenzt zudem an das Speiseelement 3 an. Die in Figur 1 dargestellte Wandung der Kammer 9 besteht teilweise aus strahlungsabsorbierendem Material 15. Durch das strahlungsabsorbierende Material 15 werden Reflexionen der Strahlung an den Kammerwänden und dadurch bedingte Störungen der Strahlungsausbreitung, beispielsweise aufgrund auftretender Interferenzen, verhindert.

Des Weiteren ist eine zu der Kammer 9 führende Zuleitung 10 realisiert. Die Zuleitung 10 ist durch Ausnehmungen in einer Kammerwand der Kammer 9 und dem ersten Teil 2a des Antennengehäuses 2 realisiert. Durch die Zuleitung 10 ist die Kammer 9 mit einem Medium beaufschlagbar. Das Medium entweicht durch die Bereiche aus porösem Material 8 der Linse 5. Dadurch wird ein Spüleffekt erreicht und es werden auf der zweiten Linsenoberfläche 7 anhaftende Ablagerungen abgetragen. Entsprechend der Temperatur des Mediums, mit dem die Kammer 9 beaufschlagt ist, tritt ein Kühleffekt oder ein Erwärmungseffekt der Linse 5 ein. Die Kammer 9 ist derart mit einem Medium beaufschlagbar, dass ein Überdruck in der Kammer 9 herrscht, wodurch auch ein Abtragen von stark anhaftenden Verschmutzungen auf der zweiten Linsenoberfläche 7 möglich ist.

Durch das poröse Material 8 der Linse 5 wird ein Druckausgleich zwischen der an die erste Linsenoberfläche 6 grenzenden Kammer 9 und dem an die zweite Linsenoberfläche 7 grenzenden Bereich - in der Regel dem Prozessraum - erreicht. Die erfindungsgemäße Antenne 1 eignet sich also insbesondere zum Einsatz bei hohen Drücken, da die Linse 5 selbst druckentlastet ist. Für einen Druckabschluss zum an das Speiseelement 3 grenzenden - nicht dargestellten - Funktionsraum der Antenne 1 muss gesorgt werden, beispielsweise durch eine Dichtung.

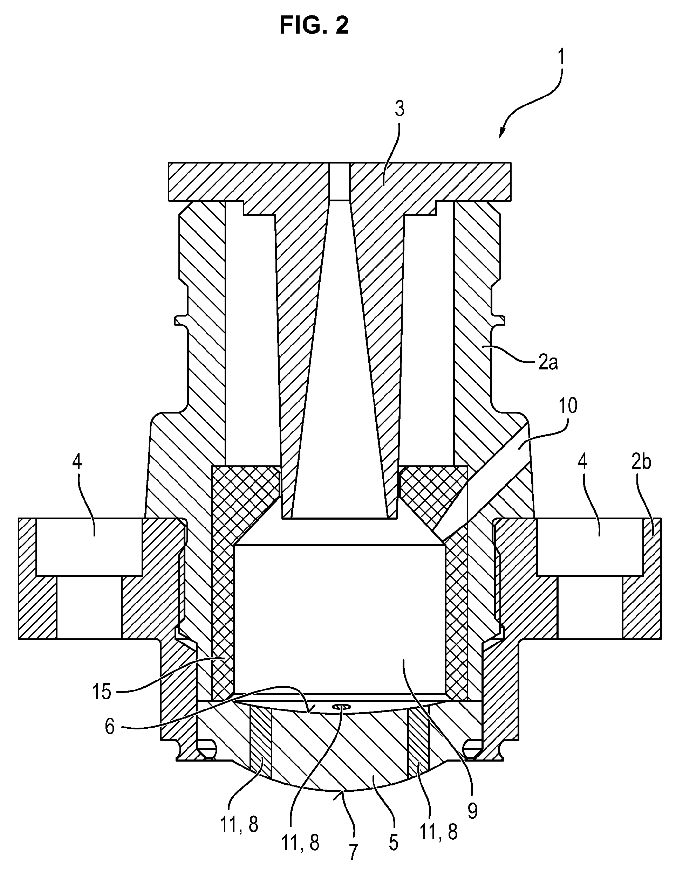

In Figur 2 dargestellt ist eine Ausführungsform einer erfindungsgemäßen Antenne, bei der die Linse 5 Kanäle 11 aus porösem Material 8 aufweist. Der Rest der Linse 5 ist aus nicht porösem Material gefertigt. Um Störungen in der Ausbreitung der elektromagnetischen Strahlung zu vermeiden, sind die Linse 5 und die porösen Kanäle 11 aus Materialien mit gleichem Brechungsindex gefertigt. Die Kanäle 11 sind in regelmäßigen Abständen symmetrisch um einen Linsenmittelpunkt zueinander angeordnet und weisen einen runden Querschnitt auf. Die Kanäle 11 verlaufen im Wesentlichen senkrecht zu der ersten Linsenoberfläche 6 und der zweiten Linsenoberfläche 7. Im Wesentlichen deshalb, weil die Linsenoberflächen 6, 7 eine Krümmung aufweisen. Hier verlaufen die Kanäle 11 in Hauptabstrahlrichtung der Antenne 1.

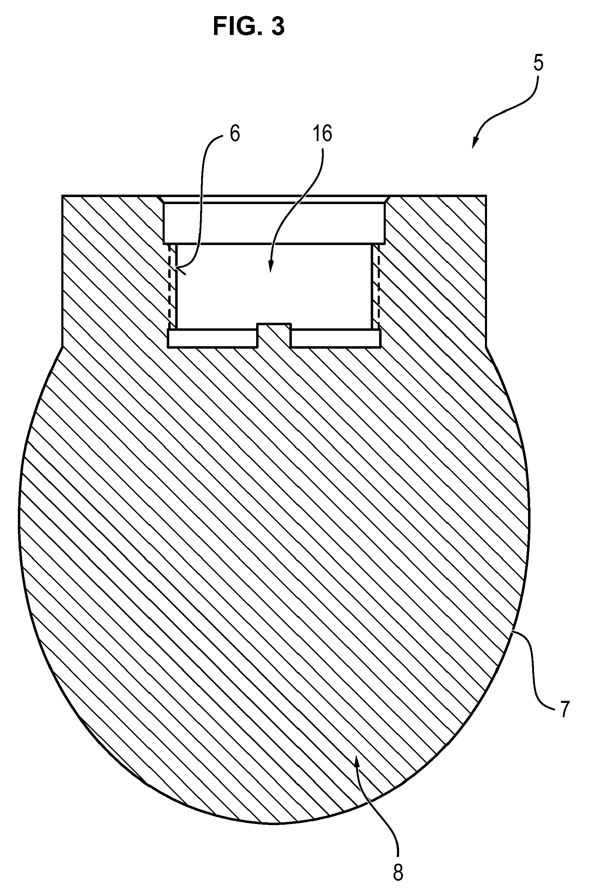

In Figur 3 ist ein Ausführungsbeispiel einer Linse 5 der erfindungsgemäßen Antenne dargestellt. Die Linse 5 ist als Ellipsoidlinse realisiert. Die Linse 5 weist eine erste Linsenoberfläche 6 und eine zweite Linsenoberfläche 7 auf, wobei die Linse 5 im Betriebszustand der Antenne über die erste Linsenoberfläche 6 elektromagnetische Strahlung von einem - nicht dargestellten - Speiseelement aufnimmt und über die zweite Linsenoberfläche 7 prozessseitig abstrahlt. Zur Aufnahme des Speiseelements weist die Linse 5 eine Ausnehmung 16 auf. Die Linse 5 besteht vollständig aus porösem Material 8.

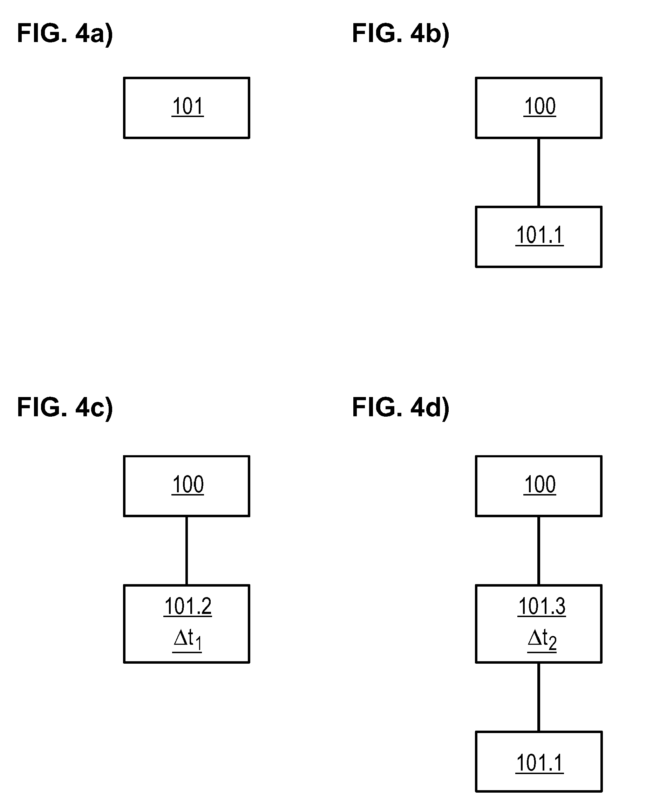

In den Fig. 4a) - 4d) sind Blockschaltbilder von Ausführungsformen des erfindungsgemäßen Verfahrens dargestellt zum Betreiben einer Antenne, wie sie aus Fig. 1 bekannt ist, mit einem Antennengehäuse, mit einem Speiseelement 3 und mit einer Linse 5, wobei die Linse 5 eine erste Linsenoberfläche 6 und eine zweite Linsenoberfläche 7 aufweist, wobei das Speiseelement 3 der Führung eingekoppelter elektromagnetischer Strahlung und der Abstrahlung elektromagnetischer Strahlung in Richtung auf die erste Linsenoberfläche 6 dient, wobei mit der Linse 5 die über die erste Linsenoberfläche 6 empfangene elektromagnetische Strahlung weitergeführt und über die zweite Linsenoberfläche 7 abgestrahlt werden kann, wobei die Linse 5 zumindest teilweise aus einem porösen Material 8 besteht, wobei das poröse Material 8 die erste Linsenoberfläche 6 und die zweite Linsenoberfläche 7 miteinander verbindet und wobei ferner eine Spülvorrichtung umfasst ist. Mit der Spülvorrichtung wird die die Linse 5 in einem Verfahrensschritt 101 derart mit einem Medium beaufschlagt , dass das Medium über die erste Linsenoberfläche 6 durch das poröse Material 8 und durch die zweite Linsenoberfläche (7) tritt (Figur 4a).

Bei den in den Figuren 4b) bis 4d) dargestellten Ausführungsformen wird in einem ersten Verfahrensschritt 100 das Medium auf eine Mediumtemperatur T₁ gebracht.Indem grundlegenden Verfahrensschritt 101.X wird die Linse über die Spülvorrichtung dann derart mit einem Medium beaufschlagt, dass das Medium über die erste Linsenoberfläche durch das poröse Material der Linse durch die zweite Linsenoberfläche tritt, so dass ein Spüleffekt eintritt.

Bei dem Ausführungsbeispiel gemäß Fig. 4b) erfolgt die Beaufschlagung der Linse mit dem Medium kontinuierlich (Verfahrensschritt 101.1). Durch eine kontinuierliche Beaufschlagung der Linse wird ein kontinuierlicher Spüleffekt erzielt. Dadurch wird erreicht, dass an der zweiten Linsenoberfläche anhaftende Ablagerungen weggespült werden, die Linsenoberfläche also gereinigt wird. Durch das kontinuierliche Spülen ist ein weiteres Anhaften von Ablagerungen nicht möglich, zumindest jedoch stark eingeschränkt. Durch das vorherige Temperieren des Mediums wird die Linse durch das Spülen auf die Mediumtemperatur T₁ gebracht.

Das in Fig. 4c) schematisch dargestellten Verfahren unterscheidet sich von dem in Fig. 4b) dargestellten Verfahren dadurch, dass in einem zweiten Verfahrensschritt 101.2, bei dem die Linse über die Spülvorrichtung derart mit einem Medium beaufschlagt wird, dass das Medium durch die erste Linsenoberfläche durch das poröse Material der Linse durch die zweite Linsenoberfläche tritt, so dass ein Spüleffekt eintritt, die Beaufschlagung der Linse über ein Zeitintervall Δt₁ erfolgt. Der Spüleffekt wird demnach nicht kontinuierlich, sondern während des Zeitintervalls Δt₁ erzielt. Diese Ausführungsform bietet sich beispielsweise dann an, wenn die Linse - die zweite Linsenoberfläche - gereinigt werden soll, wenn aber ein kontinuierliches Spülen nicht notwendig ist.

Das in Fig. 4d) schematisch dargestellte Verfahren ist dadurch gekennzeichnet, dass in einem zweiten Verfahrensschritt 101.3 die Linse mit einem Überdruck mit dem Medium beaufschlagt wird. Die Beaufschlagung mit Überdruck erfolgt über ein Zeitintervall Δt₂. Durch die Beaufschlagung der Linse mit Überdruck können insbesondere stark anhaftende Verunreinigungen von der zweiten Linsenoberfläche entfernt werden. Das Zeitintervall Δt₂ wird vorzugsweise so gewählt, dass die stark anhaftenden Verunreinigungen vollständig entfernt sind. In einem weiteren Verfahrensschritt 101.1 wird die Linse weiter kontinuierlich mit dem Medium beaufschlagt, jedoch ohne Überdruck, wodurch ein wiederholtes Anhaften von Ablagerungen verhindert wird.

## Patentansprüche

1. Antenne (1) für ein Füllstandmessgerät, mit einem Antennengehäuse (2), mit mindestens einem Speiseelement (3) und mit mindestens einer Linse (5), wobei die Linse (5) wenigstens eine erste Linsenoberfläche (6) und eine zweite Linsenoberfläche (7) aufweist, wobei das Speiseelement (3) der Führung eingekoppelter elektromagnetischer Strahlung und der Abstrahlung elektromagnetischer Strahlung in Richtung auf die erste Linsenoberfläche (6) dient, wobei mit der Linse (5) die über die erste Linsenoberfläche (6) empfangene elektromagnetische Strahlung weitergeführt und über die zweite Linsenoberfläche (7) prozessseitig abgestrahlt werden kann,
**dadurch gekennzeichnet,**
**dass** die Linse (5) zumindest teilweise aus einem porösen Material (8) besteht, wobei das poröse Material (8) die erste Linsenoberfläche (6) und die zweite Linsenoberfläche (7) miteinander verbindet, und
**dass** eine Spülvorrichtung umfasst ist, über die die Linse (5) derart mit einem Medium beaufschlagt werden kann, dass das Medium über die erste Linsenoberfläche (6) durch das poröse Material (8) und durch die zweite Linsenoberfläche (7) tritt.

2. Antenne (1) nach Anspruch 1, **dadurch gekennzeichnet, dass** das poröse Material (8) Polypropylen (PP), Ultra-High-Molecular-Weight-Polyethylen (UHMW-PE) oder Polytetrafluorethylen (PTFE) ist.

3. Antenne (1) nach Anspruch 1 oder 2, **dadurch gekennzeichnet, dass** die Spülvorrichtung eine in dem Antennengehäuse (2) ausgebildete Kammer (9) umfasst, wobei die Kammer (9) zumindest teilweise von der Linse (5) begrenzt ist, die Kammer (9) an das Speiseelement (3) angrenzt und wobei die Kammer (9) mit dem Medium beaufschlagbar ist, insbesondere durch eine durch eine Kammerwand der Kammer (9) und/oder das Antennengehäuse (2) führende Zuleitung (10) mit einem Medium beaufschlagbar ist.

4. Antenne (1) nach Anspruch 3, **dadurch gekennzeichnet, dass** die Kammer (9) mit einem elektromagnetische Strahlung absorbierenden Material ausgekleidet ist oder aus einem elektromagnetische Strahlung absorbierenden Material besteht.

5. Antenne (1) nach einem der Ansprüche 1 bis 4, **dadurch gekennzeichnet, dass** die Linse (5) im Bereich zwischen der ersten Linsenoberfläche (6) und der zweiten Linsenoberfläche (7) aus porösem Material (8) besteht.

6. Antenne (1) nach einem der Ansprüche 1 bis 4, **dadurch gekennzeichnet, dass** die Linse (5) Kanäle (11) aus porösem Material (8) aufweist.

7. Antenne (1) nach einem der Ansprüche 1 bis 4, **dadurch gekennzeichnet, dass** die Linse (5) eine poröse Deckschicht (12) aufweist, wobei die Deckschicht (12) an der dem Speiseelement (3) abgewandten Seite der Linse (5) vorgesehen ist.

8. Verfahren zum Betreiben einer Antenne (1), mit einem Antennengehäuse (2), mit mindestens einem Speiseelement (3) und mit mindestens einer Linse (5), wobei die Linse (5) wenigstens eine erste Linsenoberfläche (6) und eine zweite Linsenoberfläche (7) aufweist, wobei das Speiseelement (3) der Führung eingekoppelter elektromagnetischer Strahlung und der Abstrahlung elektromagnetischer Strahlung in Richtung auf die erste Linsenoberfläche (6) dient, wobei mit der Linse (5) die über die erste Linsenoberfläche (6) empfangene elektromagnetische Strahlung weitergeführt und über die zweite Linsenoberfläche (7) abgestrahlt werden kann, wobei die Linse (5) zumindest teilweise aus einem porösen Material (8) besteht, wobei das poröse Material (8) die erste Linsenoberfläche (6) und die zweite Linsenoberfläche (7) miteinander verbindet und wobei eine Spülvorrichtung umfasst ist, wobei die Linse (5) über die Spülvorrichtung derart mit einem Medium beaufschlagt wird, dass das Medium über die erste Linsenoberfläche (6) durch das poröse Material (8) der Linse (5) durch die zweite Linsenoberfläche (7) tritt, so dass ein Spüleffekt eintritt.

9. Verfahren nach Anspruch 8, **dadurch gekennzeichnet, dass** die Beaufschlagung der Linse (5) mit dem Medium kontinuierlich erfolgt.

10. Verfahren nach Anspruch 9, **dadurch gekennzeichnet, dass** die Beaufschlagung der Linse (5) mit dem Medium in einem vorgegebenen Zeitintervall Δt₁ erfolgt.

11. Verfahren nach einem der Ansprüche 8 bis 10, **dadurch gekennzeichnet, dass** die Beaufschlagung der Linse (5) mit dem Medium mit einem Überdruck erfolgt, insbesondere während eines vorgegebenen Zeitintervalls Δt₂ mit einem Überdruck erfolgt.

12. Verfahren nach einem der Ansprüche 8 bis 11, **dadurch gekennzeichnet, dass** das Medium auf eine Mediumtemperatur T₁ gebracht wird, bevor die Linse (5) mit dem Medium beaufschlagt wird.
